# EUROPEAN PATENT APPLICATION

(11) **EP 0 756 188 A1**
(43) Date of publication of application: **29.01.1997**
(21) Application number: 95115969.8
(22) Date of filing: 10.10.1995
(51) Int. Cl.: G02C 1/04

(54) **A pair of eyeglasses having two lenses fitted in its adjustable rigid-and-resilient rims**

(30) Priority: 26.07.1995 JP 190143/95
(71) Applicant: Kobayashi, Mitsuo, Fukui-shi, Fukui-ken (JP)
(72) Inventor: Kobayashi, Mitsuo, Fukui-shi, Fukui-ken (JP)
(74) Representative: VOSSIUS & PARTNER

(57) **Abstract**

Disclosed is a pair of eyeglasses having two lenses fitted in its rigid-and-resilient rims. The upper, rigid section of each adjustable rim has a groove made inside, and has joint means provided at its opposite ends; and the lower, resilient section or string-like extension of the adjustable rim has counter joint means on its opposite ends. The counter joint means is adjustably shiftable in the groove of the rigid section to be detachably coupled with the joint means of the rigid section, thus holding each lens in each adjustable rim by keeping the string-like extension tightly stretched.

## Description

The present invention relates to a pair of eyeglasses having two lenses fitted in its rigid-and-resilient rims. Each rigid-and-resilient rim comprises an upper, rigid section and a lower, resilient section, the opposite ends of which are connected to the opposite ends of the upper, rigid section to encircle and hold the lens by keeping the resilient string tightly stretched.

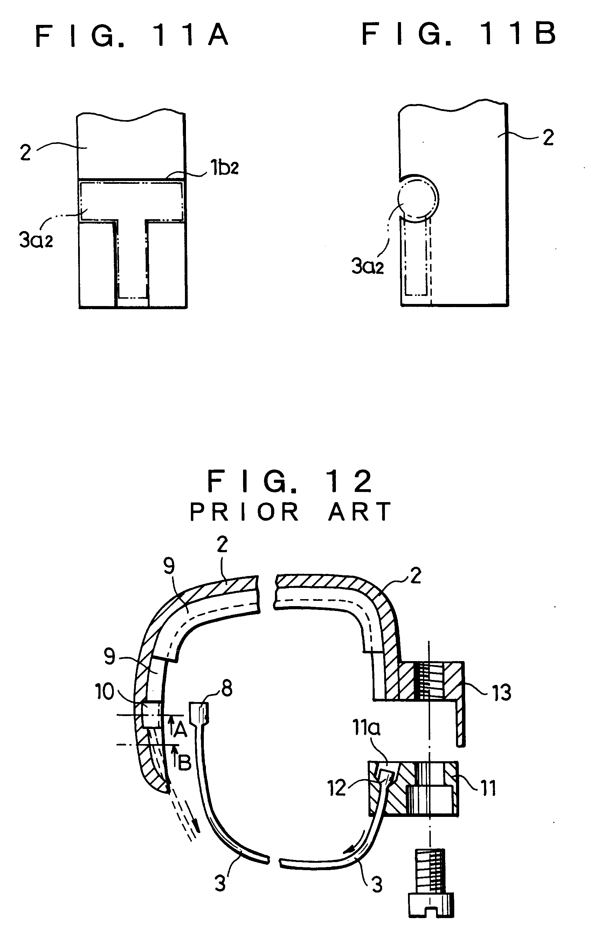

Such a rigid-and-resilient rim is shown in Japanese Utility Model 57-51918 (A). As seen from Fig.12, an upper, rigid section 2 has a groove 9 made inside, and has an enlarged recess 10 made close to one end of the upper, rigid section 2, and a lateral extension 13 integrally connected to the other end of the upper, rigid section 2. The lateral extension 13 has a longitudinal tapped hole. An attachment piece 11 has an inclined recess-and-groove 11a and a longitudinal aperture made therein. A lower, resilient section in the form of string 3 has enlarged ends 8 and 12. In assembling these parts to a rim assembly, the left enlarged end 8 of the resilient string 3 such as nylon string is press-fitted in the enlarged recess 10 of the upper, rigid section 2, and likewise, the right enlarged end 12 of the resilient string 3 is press-fitted in the inclined recess-and-groove 11a of the attachment piece 11. After encircling the lens by the rigid-and-resilient loop the lateral extension 13 and the attachment piece 11 are combined with their apertures aligned, and then, they are fixedly coupled by driving a screw in the aligned apertures 11 and 13. Apparently the resilient string 3 is of a fixed length, and cannot be adjusted in length to hold the lens firmly by stretching the resilient string 3 tightly. Therefore, the lens cannot be held firmly by the rim assembly unless the string length is somewhat shorter than the lower, half circumference of the lens. Also, disadvantageously the nylon string is liable to lose its strength with time to be broken finally. Still disadvantageously, the nylon string tends to twist itself spontaneously so that the lens may be allowed to slip off from the rim.

One object of the present invention is to provide a rigid-and-resilient rim, which can be adjusted in its circumferential length to permit the tight-stretching of the resilient section of the rim around an associated lens.

Another object of the present invention is to provide a rigid-and-resilient rim, which is guaranteed to be free of losing its resilient strength even if it is used for an extended period.

To attain these objects a pair of eyeglasses having two lenses fitted in its rigid-and-resilient rims, each lens having a circumferential groove to accomodate the resilient, string-like extension of the rim therein, is improved according to the present invention in that: the upper, rigid section of each adjustable rim has a groove made inside, and has joint means provided at its opposite ends; the lower, resilient section or string-like extension of the adjustable rim having counter joint means on its opposite ends, said counter joint means being adjustably shiftable in the groove of the rigid section to be detachably coupled with the joint means of the rigid section, thus holding the lens in each adjustable rim by keeping the string-like extension tightly stretched.

The counter joint means of each string-like extension may comprise metal pieces fixed to its opposite ends, said metal pieces having a size and shape to permit them to be slidably positioned and fixed in the groove of the rigid section, and the joint means of each rigid section comprises screws to be inserted in the tapped holes made at the opposite ends of the rigid section.

Each rigid section may have recesses made at its opposite ends to accomodate the screw heads flush with the surface of the rigid section.

A pair of eyeglasses having two lenses fitted in its rigid-and-resilient rims, each lens having a circumferential groove to accomodate the resilient, string-like extension of the rim therein, is improved according to the present invention in that: the upper, rigid section of each rim has a groove made inside, and has joint means provided at its opposite ends; the lower, resilient section or string-like extension of the rim having counter joint means on its opposite ends, said counter joint means being detachably coupled with the joint means of the rigid section, thus holding the lens in each rim by keeping the string-like extension tightly stretched.

The counter joint means of each string-like extension may comprise metal pieces of a predetermined shape fixed to its opposite ends, and the joint means of each rigid section may comprise recesses of the same shape as the metal pieces made at the opposite ends of the rigid section for accommodating the metal pieces of the string-like extension.

Each string-like extension may have "T"-shaped metals fixed to its opposite ends whereas each rigid section may have "T"-shaped recesses made at its opposite ends.

Each string-like extension may have inverted "L"-shaped metals fixed to its opposite ends whereas each rigid section may have inverted "L"-shaped recesses made at its opposite ends.

The counter joint means of each string-like extension may comprise spherical-ended, inverted "L"-shaped metal pieces fixed to the opposite ends of the string-like extension, and the joint means of each rigid section may comprise cocoon-shaped holes made at the opposite ends of the rigid section. Each cocoon-shaped hole has an upper, relatively large hole and a lower, relatively small hole communicating with the upper hole. The upper hole is large enough to permit the spherical end of the inverted "L"-shaped joint piece to fit in, but the lower hole is small enough to prevent the spherical end of the inverted "L"-shaped joint piece from slipping off.

The counter joint means of each string-like extension may comprise metal pieces each having projections (or recesses) thereon, and the joint means of each rigid section may comprise recesses (or projections) at the opposite ends of the rigid section, thus permitting the mating of the joint and counter joint means.

Other objects and advantages of the present invention will be understood from the following description of preferred embodiments of the present invention, which are shown in accompanying drawings:
Fig.1 is a perspective view of a pair of eyeglasses having two lenses fitted in its rigid-and-resilient rims according to a first embodiment (the lenses removed from the rims);
Fig.2 is a front view, showing partly in section, how the resilient string is connected to the rigid section;
Fig.3 is a similar front view, showing partly in section, the rim assembly;
Fig.4 is an enlarged sectional view of a fragment of the rim, showing one manner in which one end of the resilient string is detachably fixed to the rigid section of the rim;
Fig.5 is a similar enlarged sectional view, showing another manner in which one end of the resilient string is detachably fixed to the rigid section;
Fig.6 shows, in section, a rigid-and-resilient rim according to a second embodiment;
Fig.7 is a perspective view, showing the manner in which one end of the resilient string is detachably fixed to the rigid section in the second embodiment;
Fig.8 shows a rigid-and-resilient rim according to a third embodiment;
Figs.9(a) and 9(b) are enlarged front and side views of a fragment of the rim, showing the manner in which one end of the resilient string of Fig.8 is detachably fixed to the rigid section of the rim;
Fig.10 is a resilient string having "T"-shaped pieces fixed to its opposite ends;
Figs.11(a) and (b) are enlarged front and side views of a fragment of the rim, showing the manner in which one end of the resilient string of Fig.10 is detachably fixed to the rigid section; and
Fig.12 is an exploded front view of a conventional rigid-and-resilient rim.

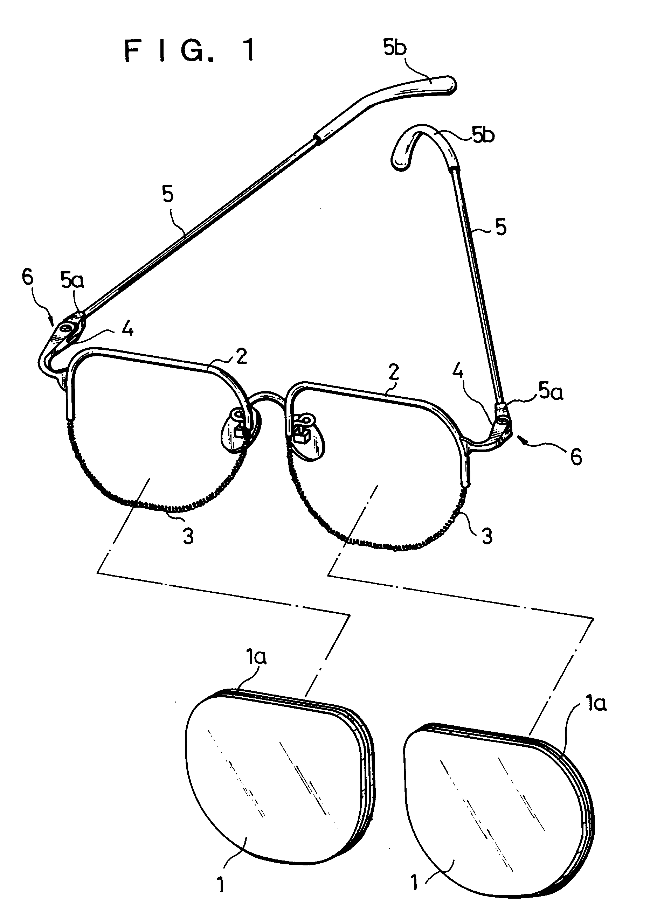

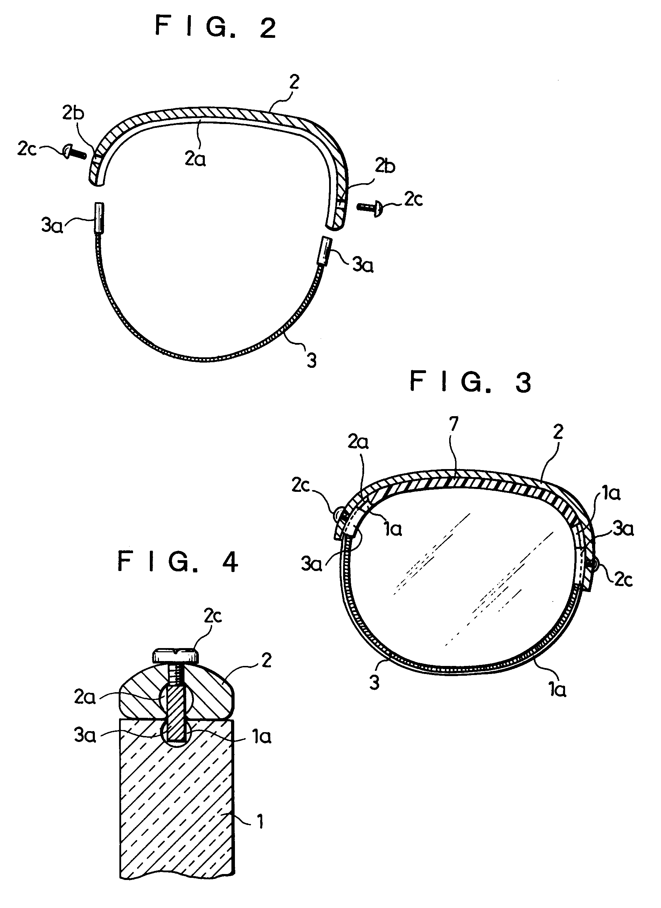

Referring to Figs.1 to 5, a pair of eyeglasses has two lenses 1 fitted in its adjustable rigid-and-resilient rims. Each glass or plastic lens has a circumferential groove 1a to accomodate the resilient, string-like extension 3 of the rim therein, as later described. An associated skull temple 5 is rotatably connected to each rim via a hinge 6, which is consisted of female and male joint pieces 4 and 5a. Each rim comprises an upper, rigid section 2 having a groove 2a made inside, and a lower, resilient section or string-like extension 3. The rigid section 2 is made of titanium-and-nickel alloy, form-memorizing alloy or any other metal appropriate for the purpose. The rigid section 2 has holes 2b made at its opposite ends for receiving fastening screws 2c, and it may have a cushioning material 7, if necessary (see Fig.3). The resilient, string-like extension 3 may be a length of spring (for instance, 0.6 mm across) having joint pieces 3a, 3a fixed (spot-welded or pressed) to its opposite ends, as best seen from Fig.2. The spring string 3 is somewhat shorter than the lower, half circumference of the lens 1.

The joint piece 3a is made of a metal or hard synthetic resin, and it can be slidably moved in the space formed by the groove 1a of the lens 1 and the groove 2a of the upper, rigid section 2.

Each joint piece 3a can be fixed to the upper, rigid section 2 by inserting and driving the screw 2c through the hole 2b to push the joint piece 3a against the lens 1, particularly the bottom of the circumferential groove 1a of the lens 1, as best seen from Fig.4. The joint piece 3a can be easily displaced in the resultant cocoon-shaped space 2a and 3a simply by loosing the screw 2c so that the length of the spring string 3 may be adjusted to be tightly stretched around the lens 1.

The spring string 3 can have a longest length when, the joint piece 3a is displaced downward, and when the uppermost end of the joint piece 3a is pushed against the lens 1 by driving the screw 2b whereas the spring string 3 can have a shortest length when the joint piece 3a is displaced upward, and when the lower-most end of the joint piece 3a is pushed against the lens 1 by driving the screw 2b. Such adjustment can be effected after the lens 1 is fitted in the rim, and therefore, a fine adjustment is permitted.

The lens 1 can be fastened firmly by adjusting the length of the spring string 3 to a length which is somewhat shorter than the lower, half circumference of the lens 1, thereby tightly stretching the spring string 3 around the lens 1, and hence holding the lens 1 firmly.

As for the hinge 6 the female and male joint pieces 4 and 5a are made of a titanium-and-nickel alloy or any other appropriate metal or alloy. The female joint piece 4 is soldered or spot-welded to the upper, rigid section 2, and similarly, the male joint piece 5a is fixed to the skull temple 5. The skull temple 5 is made of a titanium-and-nickel alloy or any other appropriate metal or alloy, and it has an end piece 5b fixed to its free end.

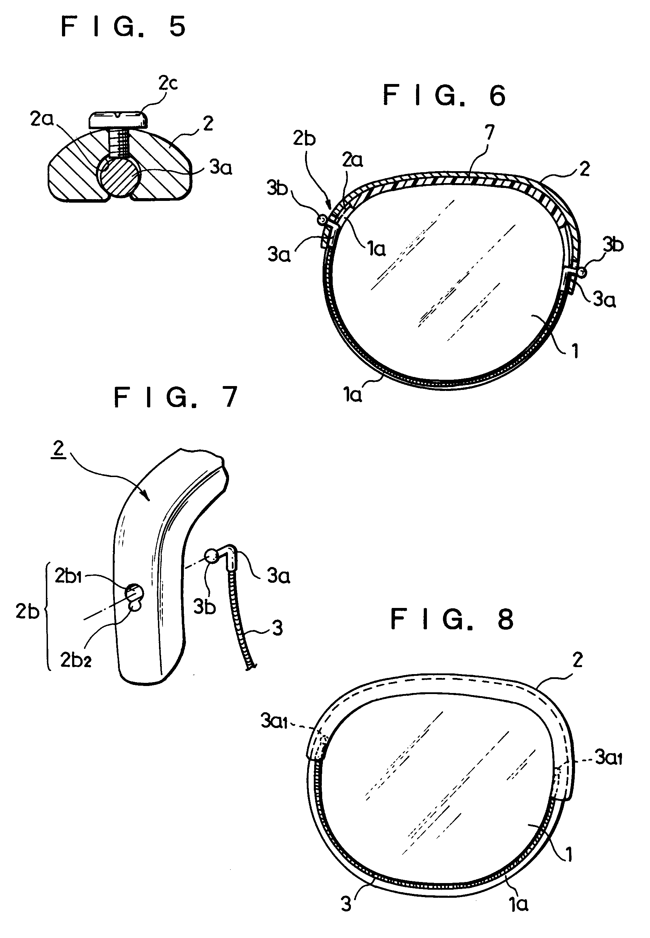

As shown in Fig.5, each joint piece 3a of the spring string 3 can be adjustably displaced and fixed in the groove 2a of the upper, rigid section 2.

Referring to Figs.6 and 7, a rigid-and-resilient rim according to the second embodiment of the present invention uses a spring string 3 having a spherical-ended joint piece 3b and an upper, rigid section 2 having cocoon-shaped holes 2b made at its opposite ends. As best seen from Fig.7, the spherical-ended joint piece comprises an inverted "L"-shaped piece 3a and a spherical body 3b integrally connected thereto, specifically to the free end of the inverted "L"-shaped piece 3a opposite to the end at which the inverted "L"-shaped piece 3a is fixed to one or the other end of the spring string 3. The cocoon-shaped hole 2b has an upper, relatively large round hole 2b₁ and a lower, relatively small round hole 2b₂. The upper, relatively large round hole 2b₁ permits insertion of the spherical body 3b of the inverted "L"-shaped joint piece, but the lower, relatively small round hole 2b₂ prevents withdrawal of the spherical body 3b of the inverted "L"-shaped joint piece therefrom.

The spring string may be colored, and covered by a thermoplastic tube such as a Teflon tube (not shown). When heated, the thermoplastic tube is shrinked to cover tightly the colored spring string, thereby preventing the rusting of the metal spring or discoloring of the colored spring. In addition, the scratching of the circumference of the lens can be prevented. Spring strings of different colors may be prepared and selectively used to coordinate a pair of eyeglasses with one's clothes. In place of Teflon tube the spring string may be subjected to Teflon surface-treatment.

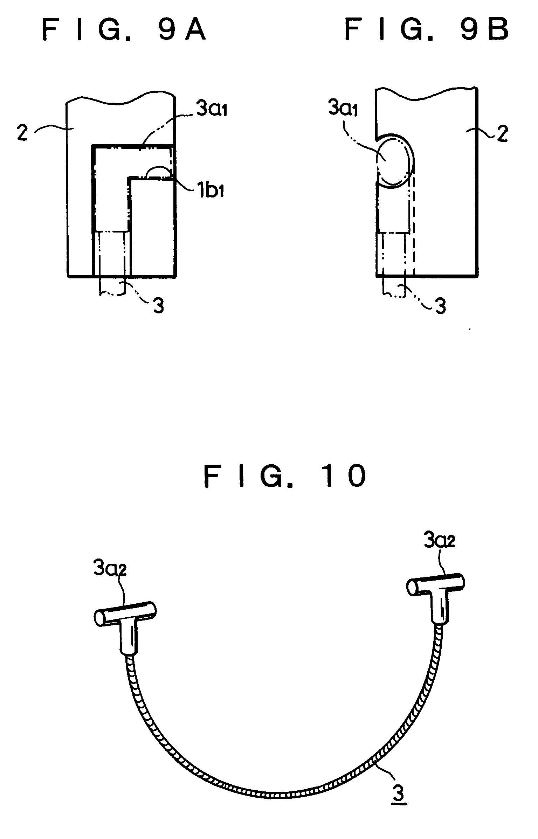

Referring to Figs.8 to 11, two spring string modifications using inverted "L"-shaped pieces (Fig.9) and "T"-shaped pieces (Figs.10 and 11) are described below.

As seen from Fig.9a, the upper, rigid section 2 has inverted "L"-shaped slots 1b₁ made in its opposite ends, and the spring string 3 has inverted "L"-shaped joint pieces 3a₁ fixed to its opposite ends. Each inverted "L"-shaped joint piece of the spring string 3 is press-fitted in the inverted "L"-shaped slot of each end of the upper, rigid section 2. In this embodiment it is unnecessary that the upper, rigid section 2 has an elongated groove made inside.

As seen from Figs.11(a) and 11(b), the upper, rigid section 2 has "T"-shaped slots 1b₂ made in its opposite ends, and the spring string 3 has "T"-shaped joint pieces 3a₂ fixed to its opposite ends (Fig.10). Each "T"-shaped joint piece of the spring string 3 is press-fitted in the "T"-shaped slot of each end of the upper, rigid section 2.

As an alternative modification the upper, rigid section has small projections inside on its opposite ends, and the spring string has recessed joint pieces fixed to its opposite ends. Each projection of the upper, rigid section is put in and caught by the recess of each joint piece of the spring string under the resilient force generated in the upper, rigid section, thus fastening the spring string to the upper, rigid section. Inversely each joint piece may have a small projection whereas each end of the upper, rigid section may have a recess to catch the small projection.

## Claims

1. A pair of eyeglasses having two lenses (1,1) fitted in its rigid-and-resilient rims (2,2), each lens (1) having a circumferential groove (1a) to accomodate the resilient, string-like extension (3) of the rim therein, characterized in that: the upper, rigid section of each adjustable rim (2) has a groove (2a) made inside, and has joint means provided at its opposite ends; the lower, resilient section or string-like extension (3) of the adjustable rim having counter joint means (3a) on its opposite ends, said counter joint means (3a) being adjustably shiftable in the groove (2a) of the rigid section to be detachably coupled with the joint means of the rigid section, thus holding each lens (1) in each adjustable rim (2) by keeping the string-like extension (3) tightly stretched.

2. A pair of eyeglasses according to claim 1, wherein the counter joint means (3a) of each string-like extension (3) comprises metal pieces fixed to its opposite ends, said metal pieces having a size and shape to permit them to be slidably positioned and fixed in the groove (2a) of the rigid section, and the joint means of each rigid section comprises screws (2c,2c) to be inserted in the tapped holes (2b,2b) made at the opposite ends of the rigid section.

3. A pair of eyeglasses according to claim 2, wherein each rigid section has recesses made at its opposite ends to accomodate the screw heads flush with the surface of the rigid section.

4. A pair of eyeglasses having two lenses (1,1) fitted in its rigid-and-resilient rims (2,2), each lens (1) having a circumferential groove (1a) to accomodate the resilient, string-like extension (3) of the rim therein, characterized in that: the upper, rigid section of each rim (2) has a groove (2a) made inside, and has joint means provided at its opposite ends; the lower, resilient section or string-like extension (3) of the rim having counter joint means (3a) on its opposite ends, said counter joint means (3a) being detachably coupled with the joint means of the rigid section, thus holding each lens (1) in each adjustable rim (2) by keeping the string-like extension (3) tightly stretched.

5. A pair of eyeglasses according to claim 4, wherein the counter joint means (3a) of each string-like extension (3) comprises metal pieces of a predetermined shape fixed to its opposite ends, and the joint means of each rigid section comprises recesses of the same shape as the metal pieces made at the opposite ends of the rigid section for accommodating the metal pieces of the string-like extension (3).

6. A pair of eyeglasses according to claim 5, wherein each string-like extension (3) has "T"-shaped metals (3a₂) fixed to its opposite ends whereas each rigid section has "T"-shaped recesses (2b₂) made at its opposite ends.

7. A pair of eyeglasses according to claim 5, wherein each string-like extension (3) has inverted "L"-shaped metals (3a₁) fixed to its opposite ends whereas each rigid section has inverted "L"-shaped recesses (2b₁) made at its opposite ends.

8. A pair of eyeglasses according to claim 4, wherein the counter joint means (3a) of each string-like extension (3) comprises spherical-ended, inverted "L"-shaped metal pieces (3a) fixed to the opposite ends of the string-like extension (3), and the joint means of each rigid section comprises cocoon-shaped holes (2b) made at the opposite ends of the rigid section, each cocoon-shaped hole (2b) having an upper, relatively large hole (2b₁) and a lower, relatively small hole (2b₂) communicating with the upper hole (2b₁), the upper hole (2b₁) being large enough to permit the spherical end of the inverted "L"-shaped joint piece (3a) to fit in, but the lower hole (2b₂) being small enough to prevent the spherical end of the inverted "L" -shaped joint piece (3a) from slipping off.

9. A pair of eyeglasses according to any one of claims 4 to 8, wherein the counter joint means (3a) of each string-like extension (3) comprises metal pieces each having projections (or recesses) thereon, and the joint means of each rigid section comprises recesses (or projections) at the opposite ends of the rigid section, thus permitting the mating of the joint and counter joint means.
